# EUROPÄISCHE PATENTANMELDUNG

(11) **EP 1 382 637 A2**
(43) Veröffentlichungstag der Anmeldung: **21.01.2004**
(21) Anmeldenummer: 03012851.6
(22) Anmeldetag: 06.06.2003
(51) Int. Cl.: C08K 3/28, C08L 97/02

(54) **Platte und Verfahren zur Herstellung einer Platte**

(30) Priorität: 19.07.2002 DE 10232874
(71) Anmelder: Hornitex-Werke Gebr. Künnemeyer GmbH & Co. KG, 32805 Horn-Bad Meinberg (DE)
(72) Erfinder: Merker, Olaf, Dr., 61197 Florstadt (DE); Kalwa, Norbert, Dr., 32805 Horn Bad Meinberg (DE)
(74) Vertreter: Dantz, Jan Henning

(57) **Zusammenfassung**

Eine Platte, insbesondere als Fußbodenbelag, umfasst lignozellulosehaltige Fasern, die unter Zugabe eines Bindemittels zu einer Platte verpresst sind. Erfindungsgemäß weist die Platte einen Anteil mindestens eines Alkali- und/oder Erdalkalisalzes zur Verbesserung der elektrischen Leitfähigkeit auf. Bei einem entsprechenden Herstellungsverfahren wird das Salz bzw. das Salzgemisch vorzugsweise in Form einer Salzflotte dem Bindemittel zugegeben.

## Beschreibung

Die vorliegende Erfindung betrifft eine Platte nach dem Oberbegriff des Anspruches 1 sowie ein Verfahren zur Herstellung einer Platte nach dem Oberbegriff des Anspruches 6. Solche leitfähigen, lignozellulosehaltigen Platten werden beispielsweise bei Fußböden, Wänden oder Möbeln eingesetzt, bei denen elektrostatische Aufladungen vermieden werden sollen. Elektrostatische Aufladungen können beispielsweise bei Geräten der modernen Bürokommunikation, wie Computern und Druckern, durch elektrische Überschläge zu Schäden führen. Auch an Fußböden können unerwünschte elektrische Aufladungen entstehen.

Aus der DE 33 38 268 sind Spanplatten mit einer elektrischen Leitfähigkeit bekannt, die durch Zugabe von Farbruß erreicht wird. Durch die Verwendung dieses leitenden Bestandteils lassen sich auftretende Ladungen schnell in den Trägerstoff abführen, um elektrische Überschläge zu vermeiden. Der Einsatz von Ruß besitzt jedoch gravierende Nachteile. Bei der Verarbeitung von Ruß auf Anlagen der Holzwerkstoffindustrie tritt eine erhebliche Verschmutzung auf. Nach der Herstellung einer Produktionscharge mit Ruß muss die gesamte Anlage gereinigt werden. Zusätzlich fallen Materialverluste und Kosten durch Übergangschargen an.

Aus der DE 36 39 816 C2 ist ein leitfähiger Fußbodenbelag bekannt, bei dem zur Verbesserung der Leitfähigkeit Metallteilchen bzw. Metallfasern in den Platten eingelagert sind. Zwar lässt sich auch hier die elektrische Leitfähigkeit erhöhen, allerdings lässt sich Metallpulver oder die Metallfasern nur schlecht homogen in dem Holzwerkstoff verteilen, so dass Bereiche mit besserer und schlechterer Leitfähigkeit entstehen können. Außerdem führt die Zugabe der Metallteilchen bei der folgenden Bearbeitung der Platten zu einem erheblichen Werkzeugverschleiß aufgrund der metallischen Bestandteile. Schließlich muss auch aus Umweltgesichtspunkten diese Lösung als nachteilig angesehen werden, da nach Ablauf der Nutzung eines entsprechenden Produktes, eine einfache Entsorgung wegen der metallischen Bestandteile nicht möglich ist.

Eine gewisse Leitfähigkeit bei lignozellulosehaltigen Trägerplatten tritt auch ein, wenn salzhaltige Leime, beispielsweise Phenolharze eingesetzt werden. Allerdings sind die in den Leimen enthaltenen Salze relativ starke Basen (Alkalihydroxide). Diese behindern bei der Weiterverarbeitung die Beschichtung. Auch eine Änderung der Luftfeuchte kann bei solchen Platten zu einer ungewollten Dimensionsänderung führen. Schließlich lassen sich solche Platten auch schlecht beschichten.

Es ist daher Aufgabe der vorliegenden Erfindung, eine Platte und ein Verfahren zur Herstellung einer solchen Platte bereitzustellen, bei denen die Platte ein ausreichendes Maß an elektrischer Leitfähigkeit besitzt, ohne dass die vorgenannten Probleme durch die Verwendung von Ruß, Metallteilchen oder Phenolharzen auftritt. Das Verfahren soll ferner effektiv und kostengünstig ausführbar sein.

Diese Aufgabe wird mit einer Platte mit den Merkmalen des Anspruches 1 sowie einem Verfahren mit dem Merkmalen des Anspruches 6 gelöst.

Erfindungsgemäß weist die Platte einen Anteil mindestens eines Alkali- und/oder Erdalkalisalzes zu Verbesserung der elektrischen Leitfähigkeit auf. Solche Salze lassen sich in Form einer wässrigen Salzflotte einfach in der Platte einlagern und/oder auf eine Platte aufsprühen, so dass eine einfache Verarbeitung gewährleistet ist. Dabei lässt sich auch eine homogene Verteilung des Salzes oder des Salzgemisches erreichen, wobei der Aushärtvorgang der Platte bzw. ein nachträgliches Beschichten der Platte nicht behindert wird. Ferner entstehen durch die Verwendung von Alkali- und/oder Erdalkalisalzen auch nicht die vorgenannten Problemen bei der Entsorgung der Platten.

Gemäß einer bevorzugten Ausführungsform der Erfindung beträgt der Anteil des mindestens einen Alkali- und/oder Erdalkalisalzes zwischen 0,1 - 5 Gew%, vorzugsweise 2 - 3 Gew% bezogen auf die Fasermasse. Durch diese Konzentration wird eine ausreichende elektrische Leitfähigkeit erreicht, um die Platte als Fußbodenbelag oder im Möbelbereich einzusetzen.

Vorzugsweise wird das Salz oder das Salzgemisch mittels einer Salzflotte mit einem pH-Wert zwischen 7 und 9, vorzugsweise 7,5 - 8,5 in der Platte eingelagert. Die Verwendung eines Salzes mit neutralem pH-Wert gewährleistet, dass der Härter nicht mit dem Salz oder Salzgemisch vorzeitig reagiert. Eine freie Base des Salzes oder Salzgemisches bindet die Säure des Härters, so dass die Aushärtung ungewollt beeinträchtigt wird. Falls statt dessen durch das Salz bzw. Salzgemisch eine freie Säure bereit gestellt wird, findet eine Aushärtung bereits bei unter 100° C statt, so dass eine Trocknung geleimter lignozellulosehaltiger Fasern schon zu einer vorzeitigen Aushärtung führen kann. Durch den Einsatz eines pH-neutralen Salzes oder Salzgemisches lässt sich das Rohmaterial für die Platte daher besser verarbeiten.

Wenn die Platte als Salz Lithiumnitrat, Natriumnitrat oder andere Alkali- bzw. Erdalkalisalze bzw. deren Gemische enthält, lässt sich die Platte kostengünstig herstellen, wobei auch eine umweltfreundliche Entsorgung möglich ist, insbesondere da keine Halogensalze verwendet werden.

Die erfindungsgemäße Platte lässt sich auch besonders gut mit Pulverlack beschichten. Als Grundvoraussetzung für die Pulverlackierung von Holzwerkstoffen ist die Erhöhung der Leitfähigkeit und die Reduzierung des Oberflächenwiderstandes des Trägermaterials zu sehen. Der Oberflächenwiderstand sollte dabei auf einen Wert von etwa 10⁸⁻¹⁰ Ω reduziert werden, was sich durch die erfindungsgemäße Zugabe eines Salzes bzw. Salzgemisches erreichen lässt. Dadurch wird auch ein Besprühen der Oberfläche und eine damit verbundene Erhöhung der Feuchtigkeit vermieden, die beim Lackieren im nachfolgenden Einbrennprozess häufig zu einer Blasenbildung führen. Dadurch kann auch das im Stand der Technik bekannte Befeuchten und anschließende Erwärmen als zusätzlicher Arbeitsgang und damit die verbundenen höheren Kosten entfallen.

Erfindungsgemäß wird auch ein Verfahren zur Herstellung einer Platte bereitgestellt, wobei das Bindemittel mindestens ein Alkali- und/oder Erdalkalisalz zur Verbesserung der elektrischen Leitfähigkeit umfasst. Vorzugsweise wird dabei das Salz oder das Salzgemisch in einer wässrigen Salzflotte mit einer Konzentration zwischen 10 und 50 %, vorzugsweise 20 und 30 % zugegeben, sodass eine gleichmäßige Verteilung innerhalb der Platte erfolgt.

Das Bindemittel kann eine Mischung aus Leim, Paraffin und Härter sowie der Salzflotte sein, wobei das Bindemittel vor der Zugabe zu den Fasern gemischt werden kann.

Für eine Absenkung des Oberflächenwiderstandes ist es möglich, eine Platte, die ohne die Leitfähigkeit erhöhende Salze hergestellt worden ist, nach dem Verpressen mit einer Salzlösung zu besprühen. Hierbei kann auch ein Nachtrocknen und ggfs. ein Schleifen der Platte erfolgen.

Die Erfindung wird nachfolgend anhand von mehreren Ausführungsbeispielen näher erläutert.

Für die Herstellung einer erfindungsgemäßen Platte werden lignozellulosehaltige Fasern als Ausgangsmaterial bereitgestellt. Für das Bindemittel werden folgende Materialien bezogen auf das Gewicht des Fasermaterials gemischt:
10 % einer wässrigen 20%igen LiNO₃-Lösung
10-15 % Leim
1 - 2 % Paraffin
1 % Härter (beispielsweise Ammoniumsulfat)

Das Bindemittelgemisch wird auf die Fasern verteilt, während diese mit Luft transportiert werden. Die mit Bindemittel versehenen Fasern werden anschließend bei einer Temperatur von unter 100 - 150 °C getrocknet.

Anschließend werden die Fasern verdichtet und vorgepresst. Dann wird die Masse erwärmt und verpresst, wobei ein Aushärten des Bindemittels erfolgt. Das zur Erhöhung der elektrischen Leitfähigkeit zugegebene LiNO₃-Salz behindert den Aushärtevorgang nicht, da dieses einen im wesentlichen neutralen pH-Wert aufweist und somit keine freie Säure oder eine freie Base vorhanden ist.

Die so hergestellte Platte kann anschließend pulverlackiert werden, wobei optional die Oberfläche erneut mit einer wässrigen Salzlösung besprüht werden kann.

Die Erfindung ist nicht auf das beschriebene Ausführungsbeispiel beschränkt, sondern kann in weiten Bereichen variiert werden. Beispielsweise kann statt einer Li-NO₃-Lösung eine NaNO₃-Lösung oder eine LiSO₄-Lösung zugegeben werden.

Ferner ist es möglich, die Salzlösungen zu mischen, beispielsweise 50 % einer Li-NO₃ und 50 % einer NaNO₃-Lösung zu mischen. Auch KNO₃ kann als Salz eingesetzt werden.

Als Härter können neben Ammoniumsulfat oder Ammoniumnitrat eingesetzt werden.

In die erfindungsgemäßen Platten können an den Oberflächen und/oder Kanten beliebige Geometrien eingefräst werden und es kann eine elektrische statische Beschichtung mit Kunststoffpulvern erfolgen. Die Platten lassen sich vorzugsweise im Möbelbereich und als Bodenplatten mit einer dekorativen Oberfläche einsetzen, allerdings sind auch andere Anwendungsbereiche möglich, in denen eine elektrostatische Aufladung verhindert werden soll.

## Patentansprüche

1. Platte, insbesondere als Fußbodenbelag, mit lignozellulosehaltigen Fasern, die unter Zugabe eines Bindemittels zu einer Platte verpresst sind, **dadurch gekennzeichnet, dass** die Platte einen Anteil mindestens eines Alkali- und/oder Erdalkalisalzes zur Verbesserung der elektrischen Leitfähigkeit aufweist.

2. Platte nach Anspruch 1, **dadurch gekennzeichnet, dass** der Anteil des mindestens einen Alkali- und/oder Erdalkalisalzes zwischen 0,1 - 5 Gew%, vorzugsweise 2 - 3 Gew%, bezogen auf die Fasermasse beträgt.

3. Platte nach Anspruch 1 oder 2, **dadurch gekennzeichnet, dass** das Salz oder das Salzgemisch mittels einer Salzflotte mit einem pH-Wert zwischen 7 und 9, vorzugsweise 7,5 - 8,5, in der Platte eingelagert ist.

4. Platte nach einem der Ansprüche 1 bis 3, **dadurch gekennzeichnet, dass** die Platte als Salz Lithiumnitrat, Natriumnitrat oder ein Gemisch dieser Salze aufweist.

5. Platte nach einem der Ansprüche 1 bis 4, **dadurch gekennzeichnet, dass** die Platte pulverlackiert ist.

6. Verfahren zur Herstellung der Platte nach einem der vorhergehenden Ansprüche, wobei die lignozellulosehaltigen Fasern mit einem Bindemittel versehen und verpresst werden, **dadurch gekennzeichnet, dass** dem Bindemittel mindestens ein Alkali- und/oder Erdalkalisalz zur Verbesserung der elektrischen Leitfähigkeit zugegeben wird.

7. Verfahren nach Anspruch 6, **dadurch gekennzeichnet, dass** das Salz oder das Salzgemisch in einer wässrigen Salzflotte mit einer Konzentration zwischen 10 und 50 %, vorzugsweise zwischen 20 und 30 % zugegeben wird.

8. Verfahren nach Anspruch 6 oder 7, **dadurch gekennzeichnet, dass** das Bindemittel eine Mischung aus Leim, Paraffin, Härter und der Salzflotte umfasst.

9. Verfahren nach einem der Ansprüche 6 bis 8, **dadurch gekennzeichnet, dass** die Fasern mit dem Bindemittel besprüht und anschließend getrocknet werden, dass eine Verdichtung und ein Vorpressen erfolgt und anschließend die Masse erwärmt und verpresst wird, wobei eine Aushärtung der Platte erfolgt.

10. Verfahren nach einem der Ansprüche 6 bis 9, **dadurch gekennzeichnet, dass** die Platte nach einem Verpressen an mindestens einer Oberfläche mit einer Salzlösung besprüht wird.
